# EUROPÄISCHE PATENTSCHRIFT

(11) **EP 0 699 465 B1**
(45) Veröffentlichungstag und Bekanntmachung des Hinweises auf die Patenterteilung: **21.02.2001**
(21) Anmeldenummer: 95113830.4
(22) Anmeldetag: 04.09.1995
(51) Int. Cl.: B01D 46/12, B01D 46/52, B09B 3/00

(54) **Luftfilter**
Air-filter
Filtre à air

(30) Priorität: 03.09.1994 DE 4431450
(43) Veröffentlichungstag der Anmeldung: 06.03.1996
(73) Patentinhaber: von Abeelen, Petronella, 63785 Obernburg (DE)
(72) Erfinder: von Abeelen, Petronella, 63785 Obernburg (DE)
(74) Vertreter: Pöhner, Wilfried Anton, Dr.

(56) Entgegenhaltungen:
- DE-A- 2 449 330
- DE-U- 9 211 811
- GB-A- 566 604
- US-A- 2 130 130
- US-A- 3 222 850
- US-A- 5 243 754

## Beschreibung

Die Erfindung bezieht sich auf einen Luftfilter mit im wesentlichen äquidistanten, parallelen Stützstäben, die endseitig mit einem Rahmen verbunden sind und an denen zusammenhängende oder einzelne Filtertaschen befestigt sind, die im wesentlichen senkrecht zu den Stützstäben von dem Luftstrom beaufschlagt werden.

Die bekannten Luftfilter der Gattung bestehen aus einzelnen oder zusammenhängenden Filtertaschen, die an Stützstäben dauerhaft befestigt (meist geklebt) sind. Die Stützstäbe sind mit einem Rahmen, der aus verschweißten und/oder vernieteten Teilen zusammengesetzt ist, dauerhaft verbunden, zum Beispiel ebenfalls durch eine Schweißnaht oder auch durch Klebstoff. Die Filtertaschen sind so angebracht, daß der Luftstrom zwischen den Stützstäben hindurch und in die Filtertaschen hineinströmt, wobei die Luft hindurchdringen kann, jedoch Partikel ab einer bestimmten Größe zurückgehalten werden. Außerdem muß das Material genügend reißfest sein, damit es dem Luftstrom standhält.

Wird ein Austauschen verschmutzter Filtertaschen notwendig, so muß der ganze Filter samt Stützstäben und Rahmen ausmontiert und entsorgt werden. Die Entsorgung ist problematisch, weil der Filter als Ganzes aus einem Materialgemisch besteht (in der Regel Glasfaser, Metall und gegebenenfalls Kunststoff und Leimrückstände), das nicht in die einzelnen Bestandteile zerlegbar ist. Daraus resultiert ein hoher Materialverbrauch, weil die noch funktionsfähigen Teile nicht wiederverwendet werden können. Die Vorrichtung gattungsgemäßer Art ist aus der DE-A-2 449 330 bekannt.
In der GB-PS 566 604 wird gefaltetes Filterpapier in einen Rahmen eingesetzt, wobei entlang der Knicklinien zumindest anströmseitig oder beidseitig Stäbe angeordnet sind, an denen oder zwischen denen das Filtermaterial fixiert wird.

Die Erfindung hat sich daher zur Aufgabe gemacht, bei Beibehaltung der Effektivität des Filters die Entsorgung zu vereinfachen und die teilweise Wiederverwertung zu ermöglichen.

Erfindungsgemäß wird die Aufgabe dadurch gelöst, daß die Filtertaschen mittels abnehmbarer Klippleitung, deren Querschnitt im wesentlichen U-förmig ist, wobei die offene Seite der U-Form in Richtung des Luftstromes weist, an den Stützstäben lösbar festgeklemmt sind und die Stützstäbe ebenso wie der Rand der Filtertaschen an dem Rahmen lösbar befestigt sind.

Die Klippleisten sind über die Stützstäbe gesteckt und pressen die Filtertaschen randseitig fest, so daß sie weder verrutschen noch herausfallen können. Wie die lösbare Verbindung zwischen den Stützstäben und dem Rahmen ausgestaltet ist, ist nicht von Bedeutung, es muß jedoch sichergestellt sein, daß Stützstäbe und Filtertaschen auch nach längerer Beaufschlagung durch einen Luftstrom festsitzen und nicht verrutschen. Die Befestigung des Randes der Filtertaschen am Rahmen geschieht luftdicht und zugstabil, jedoch lösbar und es entsteht ein Rahmenschluß, der ein seitliches Überströmen verhindert.

Die Vorteile der Erfindung sind vor allen Dingen darin zu sehen, daß die verschiedenen Teile des Filters nach dem Auswechseln getrennt werden und separat der Wiederverwertung bzw. der Entsorgung zugeführt werden können, da die Verbindungen zwischen ihnen lösbar ausgeführt sind. So können der Rahmen und die Stützstäbe in der Regel unmittelbar wieder für den selben Zweck verwendet werden, ohne daß sie dazu speziell aufbereitet werden müßten, so daß nur noch die Filtertaschen zur Entsorgung übrigbleiben. Unter Umständen können sie sogar, je nach Art der gefilterten Schmutzstoffe, gereinigt und/oder zurückgeführt werden. Ein weiterer entscheidender Vorzug ergibt sich aus der Tatsache des mechanischen Zusammenbaus, der wegen des dann möglichen Verzichts auf die Verwendung von Leim und den damit verbundenen Einsatz gesundheitsschädlicher Lösungsmittel als entscheidend umweltfreundlicher anzusehen ist. Weiter erlaubt das mechanische Zusammenfügen den maschinellen Einsatz bei Aufbau, Zerlegen und Auswechseln von Einzelteilen.

Die Verbindung zwischen den Stützstäben und dem Rahmen wird zweckmäßigerweise so ausgeführt, daß an zwei gegenüberliegenden Seiten eine durchgehende U-förmige Nut angebracht ist, deren offene Seite Richtung Rahmenmitte weist und in die die Stützstäbe eingesetzt sind. Die Fixierung der Stäbe wird durch federnde, gegen die Stützstäbe drückenden Schenkel der Nut oder bei nicht federnden Schenkeln von einem in der Nut eingespannten flexiblen Klemmstreifen bewerkstelligt. Durch die Federkraft bzw. den von flexiblen Klemmstreifen ausgeübten Druck, werden die Stäbe an die Nut gepreßt und somit fixiert.

In einer vorteilhaften Ausgestaltung der Erfindung wird die Befestigung zwischen Stützstäben und Rahmen dadurch verbessert, daß die Stützstäbe auf eine Auswölbung der Nut aufgelegt werden, welche vorzugsweise eine Verzahnung oder Noppen aufweist, wodurch die Stützstäbe noch besser gegen ein Verrutschen längs des Rahmens geschützt sind. Sie werden dazu zwischen zwei Zähne oder Noppen der Auswölbung eingesetzt.

Eine alternative Möglichkeit die Stützstäbe zu befestigen besteht darin, daß der Rahmen an den zwei gegenüberliegenden Seiten Klemmen aufweist, in die die Stützstäbe gesteckt sind. Die Öffnung der Klemmen weist dabei zweckmäßigerweise entgegen dem Luftstrom, also entgegen der Kraft, der die Filtertaschen und somit auch die Stützstäbe ausgesetzt sind. Somit wird vermieden, daß die Stützstäbe durch die Krafteinwirkung des Luftstroms aus den Klemmen herausgezogen werden.

In einer sinnvollen Ausführungsform erstrecken sich die Klippleisten über die ganze Länge der Stützstäbe, wodurch nur eine Klippleiste pro Stützstab notwendig ist und dadurch das Einsetzen und Entfernen der Filtertaschen weniger zeitaufwendig ist. Außerdem sind die auf der ganzen Länge fixierten Filtertaschen besser gegen Verrutschen geschützt und reißen weniger leicht ein. Gleichzeitig stellen die Klippleisten einen Anströmschutz für die evtl. die Nähte bildenden Auflageflächen des Filtertaschenverbandes dar.

In einer zweckmäßigen Ausgestaltung sind die Seiten des Rahmens über Eckverbinder zusammengesetzt. Dies hat den Vorteil, daß auch der Rahmen noch zerlegbar ist und dadurch platzsparender gelagert werden kann. Außerdem lassen sich die Stützstäbe aus einem zerlegten Rahmen leichter entfernen.

Ein vorteilhaftes Verfahren zur maschinellen und automatischen Trennung von Filterteilen besteht darin, daß nach dem Einsetzen des Luftfilters die Maschine zunächst den flexiblen Klemmstreifen automatisch entfernt. Danach werden die Klippleisten abgehoben und schließlich die Stützstäbe entfernt. Die übriggebliebenen verschmutzten Filtertaschen können paketiert und der Entsorgung zugeführt werden. Die Rahmen, die Klippleisten, die Stützstäbe und gegebenenfalls auch die Klemmstreifen können wiederverwendet werden. Falls die Klemmstreifen jedoch unbrauchbar geworden sind, werden sie der Entsorgung zugeführt.

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird. Es zeigen in schematischer Darstellung
- Figur 1: die Gesamtansicht eines Filters in perspektivischer Darstellung,
- Figur 2: einen Schnitt des Filters senkrecht zu den Stützstäben,
- Figur 3: einen Schnitt des Filters parallel zu den Stützstäben.

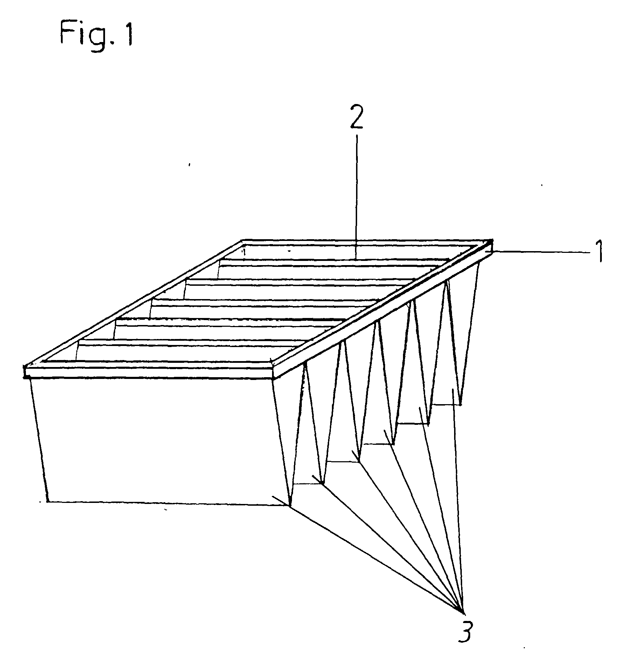

Figur 1 zeigt die Gesamteinsicht eines Luftfilters mit rechteckigem Rahmen (1), in den sieben parallele, äquidistante Stützstäbe (2) eingesetzt sind, die von einer Kante des Rahmens (1) zur gegenüberliegenden reichen, wobei die beiden äußeren Stützstäbe (2) mit den zu ihnen parallelen Kanten abschließen. Zwischen zwei benachbarten Stützstäben (2) ist jeweils eine Filtertasche (3) eingehängt.

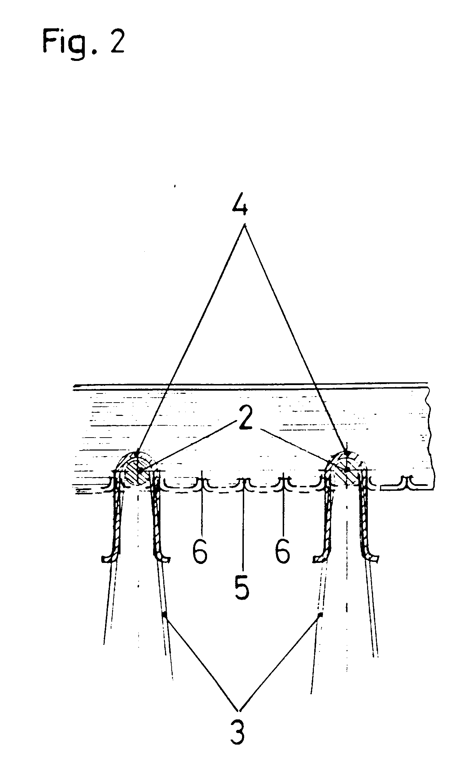

In Figur 2 ist ein Ausschnitt des Schnitts senkrecht zu den Stützstäben desselben Luftfilters dargestellt. Die miteinander verbundenen Filtertaschen (3) sind über die Stützstäbe (2) gelegt und durch Klippleisten (4) festgeklemmt. Die Stützstäbe liegen auf einer Kante des Rahmens (1) mit Verzahnung zwischen zwei Zähnen (6) auf.

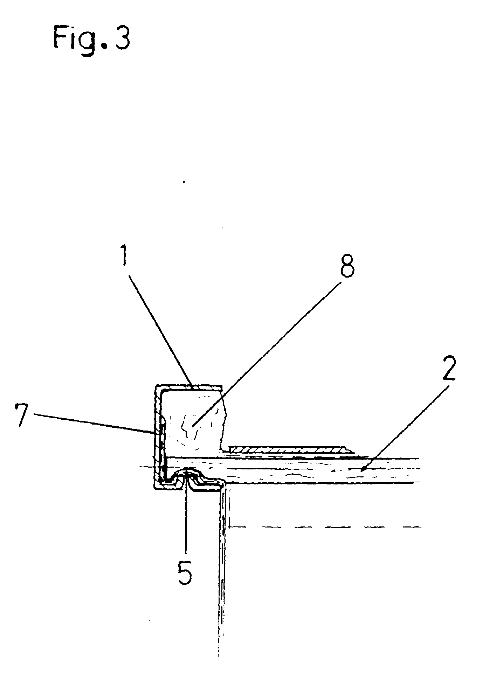

In Figur 3 ist derselbe Luftfilter in einem Schnitt gezeichnet, wobei die Schnittfläche senkrecht zu der von Figur 2 steht. Der Stützstab (2) reicht in die U-förmige Nut (7) hinein und wird durch einen flexiblen Klemmstreifen (8) gegen die Auswölbung (5) des Rahmens (1) gepreßt.

## Patentansprüche

1. Luftfilter mit im wesentlichen äquidistanten, parallelen Stützstäben, die endseitig mit einem Rahmen verbunden sind und an denen zusammenhängende oder einzelne Filtertaschen befestigt sind, die im wesentlichen senkrecht zu den Stützstäben von dem Luftstrom beaufschlagt werden, **dadurch gekennzeichnet,** daß die Filtertaschen (3) mittels abnehmbarer Klippleisten (4), deren Querschnitt im wesentlichen U-förmig ist, wobei die offene Seite der U-Form in Richtung des Luftstromes weist, an den Stützstäben (2) lösbar festgeklemmt sind und die Stützstäbe (2) ebenso wie der Rand der Filtertaschen (3) an dem Rahmen (1) lösbar befestigt sind.

2. Luftfilter nach Anspruch 1, **dadurch gekennzeichnet,** daß der Rahmen (1) an zwei gegenüberliegenden Seiten eine durchgehende U-förmige Nut (7) aufweist, die zur Mitte des Rahmens (1) hin geöffnet ist und daß die Stützstäbe (2) in die Nut (7) eingesetzt sind und entweder von federnden Schenkeln der Nut (7), die mit ihrer Federkraft gegen die Stützstäbe (2) und die Filtertaschen (3) drücken, gehalten oder von einem in der Nut (7) eingespannten flexiblen Klemmstreifen (8) gegen die Nut (7) gepreßt werden.

3. Luftfilter nach Anspruch 1 und 2, **dadurch gekennzeichnet,** daß die Nut (7) eine Auswölbung (5) an der Innenseite des in Luftströmungsrichtung gesehen hinteren Schenkels der U-förmigen Nut aufweist und daß die Stützstäbe (2) eine Kerbe aufweisen, die auf die Auswölbung (5) aufgesetzt ist.

4. Luftfilter nach Anspruch 3, **dadurch gekennzeichnet,** daß die Auswölbung (5) eine Verzahnung (6) oder ein Noppen ist und daß die Stützstäbe (2) mit dem Rand der Filtertaschen (3) in dem Raum zwischen zwei Zähnen (6) oder Noppen an der Auswölbung (5) anliegen.

5. Luftfilter nach Anspruch 1, **dadurch gekennzeichnet,** daß der Rahmen (1) an zwei gegenüberliegenden Seiten, im wesentlichen äquidistante Klemmen aufweist, in die die Stützstäbe (2) und die Filtertaschen (3) mit ihrem Rand gesteckt sind.

6. Luftfilter nach einem der vorhergehenden Ansprüche, **dadurch gekennzeichnet,** daß sich die Klippleisten (4) über die ganze Länge der Stützstäbe (2) erstrecken.

7. Luftfilter nach einem der vorhergehenden Ansprüche, **dadurch gekennzeichnet,** daß der Rahmen (1) über lösbar befestigte Eckverbinder geschlossen ist.

8. Verfahren zur maschinellen, automatischen Trennung von Filterteilen für das Wiederverwerten und Entsorgen eines Luftfilters nach einem der vorhergehenden Ansprüche, **gekennzeichnet durch** folgende Verfahrensschritte:
- Luftfilter in die Maschine einlegen,
- ggf. flexiblen Klemmstreifen (8) entfernen
- Klippleisten (4) abheben
- verschmutzte Filtertaschen (3) entfernen

## Claims

1. Air filter having essentially equidistant, parallel support rods whose ends are connected to a frame and on which filter bags arc fastened, together or individually, which are impinged by the air flow essentially perpendicular to the rods, **wherein** said bags (3) are clamped to said rods (2) by means of removable, essentially U-shaped clip sections (4), the open end of the 'U' faces being directed in the direction of the air flow and in a similar manner to the edge of said filter bags (3) said rods (2) are releasably fastened to the frame (1).

2. Air filter in accordance with claim 1, **wherein** said frame (1) has a continuous U-shaped groove (7) on two opposing sides, which towards the centre of the frame (1) opens and said support rods (2) are inserted in said groove (7) and are either held by the spring flanks of the groove (7), which press against support rods (2) and the filter bags (3), or are pressed against groove (7) by a flexible clamping strip (8) which is mounted in the groove (7).

3. Air filter in accordance with claim 1 and 2, **wherein** said groove (7) has a camber (5) on the inside of the rear flank, seen from the direction of the air flow, of the U-shaped groove and said support rods (2) have a notch which is placed on the camber.

4. Air filter in accordance with claim 3, **wherein** said camber (5) is a toothed wheel work (6) or a knob and said support rods (2) with the edge of filter bags (3) rest against said camber (5) in the space between two teeth (6) or the knobs.

5. Air filter in accordance with claim 1, **wherein** said frame (1), on two opposing sides, has essentially equidistant clamps into which are inserted support rods (2) and the filter bags (3) with their edge.

6. Air filter in accordance with one of the preceding claims, **wherein** said clip sections (4) extend across the total length of said support rods (2).

7. Air filter in accordance with one of the preceding claims, **wherein** said frame (1) is closed via releasably fastened corner connectors.

8. Method for the mechanical, automatic separation of filter parts for reutilisation and disposal of an air filter in accordance with one of the preceding claims, **wherein** there are the following steps to the method:
- insert air filter into the machine
- remove flexible clamping strips (8) if necessary
- lift off clip sections (4)
- remove soiled filter bags (3)

## Revendications

1. Filtre à air avec entretoises parallèles, pratiquement équidistantes, dont l'extrémité est reliée à un cadre et sur lesquelles sont fixées des poches filtrantes contiguës ou séparées, le courant d'air les traversant essentiellement perpendiculairement aux entretoises, **caractérisé en ce que** les poches filtrantes (3) généralement de section en U, la face ouverte du U étant tournée vers le courant d'air, sont fixées sur les entretoises (2) par des baguettes clippées (4), **et en ce que** les entretoises (2) et le bord des poches filtrantes (3) sont attachées au cadre (1) par une liaison amovible.

2. Filtre à air selon la revendication 1, **caractérisé en ce que** le cadre (1) présente une rainure en forme de U (7) sur deux côtés opposés, la face ouverte du U étant dirigée vers le centre du cadre (1), **et en ce que** les entretoises (2) introduites dans la rainure (7), sont maintenues par les ailes de cette dernière, qui font ressort et poussent contre les entretoises (2) et les poches filtrantes (3), et sont plaquées contre la rainure (7) par une baguette souple (8) encastrée dans celle-ci.

3. Filtre à air selon les revendications 1 et 2, **caractérisé en ce que** la face intérieure de l'aile arrière de la rainure en forme de U (7), vue dans le sens du courant d'air, présente un bombement (5) et **en ce que** les entetoises (2) sont dotées d'une encoche au niveau du bombement (5).

4. Filtre à air selon la revendication 3, **caractérisé en ce que** le bombement (5) se présente sous forme de denture (6) ou de nope **et en ce que** les entretoises (2) et le bord des poches filtrantes (3) rentrent dans l'espace entre deux dents (6) ou deux nopes au niveau du bombement (5).

5. Filtre à air selon la revendication 1, **caractérisé en ce que** le cader (1) est muni de pinces pratiquement équidistantes sur deux côtés, dans lesquelles rentrent les entretoises (2) et le bord des poches filtrantes (3) .

6. Filtre à air selon l'une des revendications précédentes, **caractérisé en ce que** les baguettes clippées (4) couvrent toute la longueur des entretoises (2).

7. Filtre à air selon l'une des revendications précédentes, **caractérisé en ce que** le cadre (1) est fermé au moyen de coins amovibles.

8. Procédé de triage mécanique et automatique des composants du filtre permettant de récupérer le filtre à air conforme à l'une des revendications précédentes et d'éliminer les déchets, **caractérisé** par les étapes suivantes :
- mise en place du filtre dans la machine,
- le cas échéant, dépose de la baguette souple (8),
- dépose des baguettes clippées (4)
- élimination des poches filtrantes colmatées (3).
